# EUROPEAN PATENT APPLICATION

(11) **EP 3 291 124 A1**
(43) Date of publication of application: **07.03.2018**
(21) Application number: 15890639.6
(22) Date of filing: 15.12.2015
(51) Int. Cl.: G06F 21/62

(54) **ELECTRONIC DATA PROTECTION METHOD AND DEVICE, AND TERMINAL DEVICE**

(30) Priority: 28.04.2015 CN 201510209406
(71) Applicant: NiiP Limited, Kowloon, Hong Kong (CN)
(72) Inventor: PAREZ, Timothy, Kowloon Hong Kong (CN); YU, Victor, Kowloon Hong Kong (CN); GANTOIS, Joeri, Kowloon Hong Kong (CN)
(74) Representative: 2K Patentanwälte Blasberg Kewitz & Reichel
(86) International application number: PCT/CN2015/097433
(87) International publication number: WO 2016/173264

(57) **Abstract**

An electronic data protection method and device, terminal device and storage medium. The method comprises the steps of: when an encryption instruction is received, executing an encryption process (S301); in the encryption process, respectively transmitting an information acquisition instruction to data protection key hardware devices, wherein the information acquisition instruction comprises a device identifier acquisition instruction and a fingerprint information acquisition instruction, and respectively receiving information returned by the data protection key hardware devices according to the information acquisition instruction, wherein the information respectively comprises a device identifier and user fingerprint information (S302); and encrypting, according to the information returned by the data protection key hardware device, an object to be encrypted to obtain an encrypted object (S303). The above method adopts a method of combining software and hardware to encrypt a file, and the encryption is performed based on the information provided by the data protection key hardware device when the file is encrypted. With respect to a method of a pure software encryption, the encryption is not limited to the data protection key hardware device, thus effectively expanding electronic data storage space.

## Description

### BACKGROUND OF THE INVENTION

### Technical Field

The invention relates to the technical field of information security, in particular to an electronic data protection method, an electronic data protection device, and a terminal device.

### 2. Description of Related Art

With the increasing development of information technology and the requirement for saving resources, the application of storing information as electronic data has become increasingly wider and wider, and in order to prevent the electronic data from being stolen by other people and preventing the situation where the specific contents of electronic data cannot be known after the electronic data are stolen by other people, higher requirements for the storage security of electronic data are provided along with the wide application of electronic data storage. In existing electronic data protection schemes, software is generally adopted for encrypting electronic data files through passwords, and only when correct passwords are input can the electronic data files be opened and the contents in the files be checked. The electronic data protection method is low in encryption intensity, users need to remember high-intensity passwords, and the electronic data files cannot be opened once the users forget the passwords. At present, the method of encrypting electronic files through hardware has appeared; hardware encryption generally refers to a random number generated through hardware being used for encrypting files, the process of encrypting and decrypting the electronic data files is bound with specific hardware devices, since existing hardware is generally connected with terminals such as personal computers through universal serial bus (USB) interfaces, the plug-and-play characteristic is achieved, the files are in the encrypted state almost all the time, and the security is improved compared with the encryption method purely through software. However, by adoption of the hardware encryption method, encrypted files need to be stored on hardware used for encryption, the storage space of the hardware is generally limited, and consequentially, electronic data protection is limited.

### BRIEF SUMMARY OF THE INVENTION

Based on this, the embodiment of the invention aims to provide an electronic data protection method, an electronic data protection device and a terminal device, and by implementing the scheme of the embodiment of the invention, the security of protected electronic data can be improved, and the storage space for electronic data can be expanded.

For realizing the above aims, the following technical scheme is adopted by the embodiment of the invention:
An electronic data protection method comprises the steps of:
   performing the encryption process when an encryption instruction is received;
   in the encryption process, sending information acquisition instructions to a data protection key hardware device respectively, and receiving information returned by the data protection key hardware device according to the information acquisition instructions respectively, wherein the information acquisition instructions include a device identification acquisition instruction and a fingerprint information acquisition instruction, and the information returned by the data protection key hardware device includes the device identification and user fingerprint information;
   encrypting a to-be-encrypted object according to the information returned by the data protection key hardware device, and obtaining an encrypted object.

An electronic data protection device, comprising:
an encryption instruction receiving module used for receiving an encryption instruction;
an information acquisition module used for sending information acquisition instructions to a data protection key hardware device respectively and receiving information returned by the data protection key hardware device according to the information acquisition instructions respectively in the encryption process, wherein information acquisition instructions include a device identification acquisition instruction and a fingerprint information acquisition instruction, and the information returned by the data protection key hardware device includes the device identification and user fingerprint information;
an encryption processing module used for performing the encryption process according to the encryption instructions, encrypting a to-be-encrypted object according to the information returned by the data protection key hardware device and obtaining an encrypted object.

A terminal device comprises a terminal device body, and the electronic data protection device mentioned above is stored in a storage medium of the terminal device body.

A storage medium includes a computer-readable program, and the electronic data protection method mentioned above is performed when the computer-readable program in the storage medium is performed.

According to the scheme of the embodiment of the invention, software and hardware are essentially combined to encrypt a to-be-encrypted object, in the process of encrypting the to-be-encrypted object, the user fingerprint information and the device identification of the data protection key hardware device are acquired through continuous communication with the data protection key hardware device, the encryption process depends on the acquired user fingerprint information and the device identification of the data protection key hardware device, and the to-be-encrypted object is encrypted based on the information provided by the data protection key hardware device; compared with the encryption method purely through hardware, the security of the encrypted object is greatly improved, and the encrypted object cannot be decrypted by any hackers or other people who want to steal information as long as the data protection key hardware device is possessed by the user. On the other hand, since the encryption process is not carried out on the data protection key hardware device and is performed essentially through hardware, the storage position of the obtained encrypted object can be set flexibly without being limited to the data protection key hardware device, and the storage space for electronic data is effectively expanded.

### BRIEF DESCRIPTION OF THE SEVERAL VIEWS OF THE DRAWINGS

FIG. 1 is a schematic diagram of an operating environment of the scheme of one embodiment of the invention;
FIG. 2 is a schematic diagram of the composition structure of a terminal device in one embodiment;
FIG. 3 is a flow diagram of an electronic data protection method in one embodiment;
FIG. 4 is a principle diagram of the encryption process of the electronic data protection method in one embodiment;
FIG. 5 is a principle diagram of protection for an encrypted object during running after the encrypted object is opened in one embodiment;
FIG. 8 is a principle diagram of protection for the encrypted object after the opened encrypted object is closed in one embodiment; and

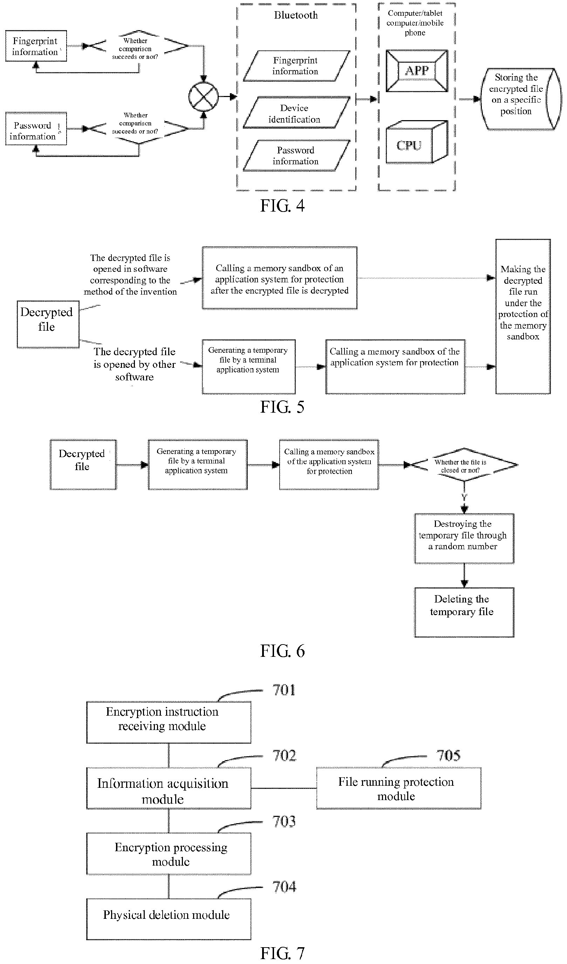

FIG. 7 is a structure diagram of an electronic data protection device in one embodiment.

### DETAILED DESCRIPTION OF THE INVENTION

For making the purpose, the technical scheme, and the advantages of the invention understood more clearly, a further detailed description of the invention is given with accompanying drawings and embodiments. It should be understood that the embodiments in the description are only used for explaining the invention but not used for limiting the protection scope of the invention.

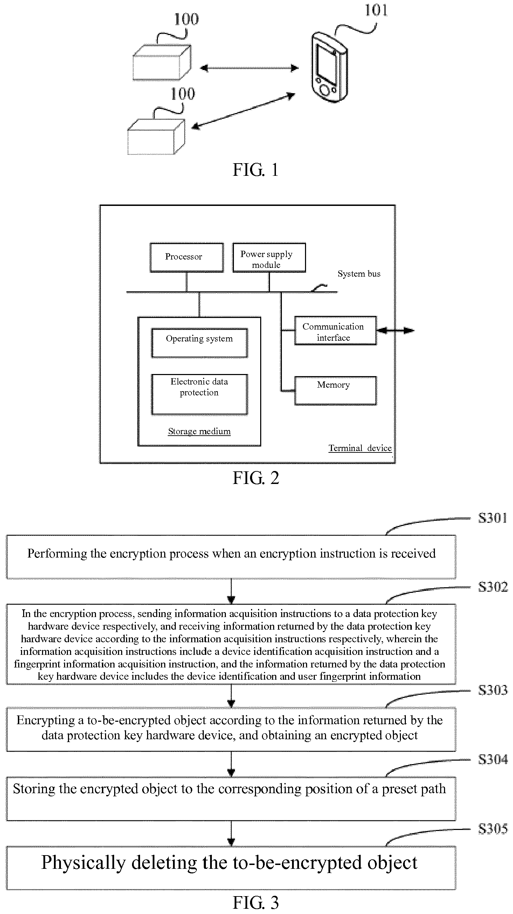

FIG. 1 shows a schematic diagram of the operating environment in one embodiment of the invention. As is shown in FIG. 1, in the scheme of the embodiment of the invention, a data protection key hardware device 100 and a terminal device 101 are related, and the data protection key hardware device 100 can communicate with the terminal device 101 through Bluetooth or in other ways; the terminal device 101 communicates with the data protection key hardware device 100 so as to acquire information, such as user fingerprint information and the device identification of the data protection key hardware device 100, from the data protection key hardware device 100 in the process of encrypting a to-be-encrypted object, and encrypts the to-be-encrypted object based on the information. An encrypted object obtained after encryption can be stored in any possible position through the terminal device 101. Wherein, multiple data protection key hardware devices 100 can be included, for example, two data protection key hardware devices are shown in FIG. 1. In this way, under the condition that one data protection key hardware device is lost, other data protection key hardware devices can serve as backup devices to encrypt the to-be-encrypted object or decrypt the encrypted object in cooperation with the terminal device 101. The embodiment of the invention relates to the scheme for encrypting the to-be-encrypted object and protecting the encrypted object through cooperation between the data protection key hardware device 100 and the terminal device 101.

FIG.2 shows the structure diagram of the terminal device 101 in one embodiment. The terminal device comprises a processor, a power supply module, a storage medium, a communication interface and a memory which are connected through a system bus, wherein an operating system and an electronic data protection device are stored in the storage medium of the terminal device 101, and the electronic data protection device is used for realizing an electronic data protection method. The communication interface of the terminal device is used for communication with the data protection key hardware device, and the terminal device 101 can be realized in any possible way such as personal computers (PC), intelligent tablet computers, and smart phones.

In the embodiment of the invention, the to-be-encrypted object needing to be encrypted can be a file stored on the terminal device or other devices and can also be information of other types such as character strings. Correspondingly, information obtained after encryption is called an encrypted object.

FIG. 3 shows an electronic data protection method in one embodiment. As is shown in FIG. 3, the electronic data protection method in the embodiment comprises the steps of:

S301, performing the encryption process when an encryption instruction is received;

S302, in the encryption process, sending information acquisition instructions to a data protection key hardware device respectively, and receiving information returned by the data protection key hardware device according to the information acquisition instructions respectively, wherein the information acquisition instructions include a device identification acquisition instruction and a fingerprint information acquisition instruction, and the information returned by the data protection key hardware device includes the device identification and user fingerprint information;

S303, encrypting a to-be-encrypted object according to the information returned by the data protection key hardware device, and obtaining an encrypted object.

According to the above scheme of the embodiment of the invention, software and hardware are essentially combined to encrypt a to-be-encrypted object, in the process of encrypting the to-be-encrypted object, the user fingerprint information and the device identification of the data protection key hardware device are acquired through continuous communication with the data protection key hardware device, the encryption process depends on the acquired user fingerprint information and the device identification of the data protection key hardware device, and the to-be-encrypted object is encrypted based on the information provided by the data protection key hardware device; compared with the encryption method purely through hardware, the security of the encrypted object is greatly improved, and the encrypted object cannot be decrypted by any hackers or other people who want to steal information as long as the data protection key hardware device is possessed by the user. On the other hand, since the encryption process is not carried out on the data protection key hardware device and is performed essentially through hardware, the storage position of the obtained encrypted object can be set flexibly without being limited to the data protection key hardware device, and the storage space for electronic data is effectively expanded.

Wherein, the to-be-encrypted object can also be encrypted based on a password set by a user. Therefore, the information acquisition instructions sent to the data protection key hardware device in the step S302 can also include a password information acquisition instruction.

In this circumstance, the received information returned by the data protection key hardware device according to the information acquisition instructions can also include password information.

Correspondingly, when the to-be-encrypted object is encrypted in the step S303, the to-be-encrypted object is encrypted based on the user fingerprint information, the device identification, and the password information returned by the data protection key hardware device according to the password information acquisition instruction.

Wherein, the user fingerprint information can be obtained through an ordinary fingerprint recognition device. For further improving the information security, in the embodiment of the invention, the fingerprint information is obtained through a swiping-type fingerprint acquisition device. Since the ordinary fingerprint recognition device is used for recognizing static fingerprint information, fingerprint pictures can also be recognized as correct fingerprints and are extremely likely to be used illegally for cheating, and the security of files is affected. In the embodiment of the invention, the fingerprint information is dynamically obtained in the swiping mode, static fingerprint information cannot be recognized, the probability of cheating by fingerprint information is avoided, and the security is improved.

On the other hand, the user fingerprint information can be binary digital fingerprint information instead of fingerprint pictures, the probability that the fingerprint information of the user is duplicated is avoided, and the security is further improved.

The device identification of the data protection key hardware device can be represented by a random number generated by a programming quantum computer when the data protection key hardware device is manufactured. With the presence of multiple data protection key hardware devices, the same random number can be used as the device identifications of the multiple data protection key hardware devices, and the random number can be generated and written in by the programming quantum computer in the manufacturing process so that the multiple data protection key hardware devices can mutually backup, and an encrypted file can be decrypted through another data protection key hardware device under the condition that one data protection key hardware device is lost, and the security of electronic data is ensured.

For further improving the security, the user fingerprint information, the device identification, and the password information stored on the data protection key hardware device can be information encrypted through the data protection key hardware device, and thus the security is further improved. The specific encryption method can be any possible method and is not specifically limited in the embodiment of the invention, for example, a method different from the encryption method for the to-be-encrypted object can be adopted.

In one specific demonstration of the invention, with password information as an example, the password information obtained after an original password input by the user is encrypted through the data protection key hardware device can be a random number, and the storage position of the password information obtained after encryption can be determined according to a generated random number. Based on this, when the data protection key hardware device receives the password information acquisition instruction, the corresponding address random number can be determined first, the password information random number can be obtained from the storage address of the password information random number after the storage address of the password information random number is found based on the address random number, the password information random number is decrypted, and thus the password information is obtained. Then the password information obtained through decryption is transmitted to a sender, namely the terminal device, sending the password information acquisition instruction through Bluetooth, wherein, the Bluetooth transmission process can be carried out in an encryption mode. The storage and acquisition method for the user fingerprint information and the device identification can be similar to that for the password information.

As is shown in FIG. 3, the encrypted object can be stored at the corresponding position of a preset path in the step S304 after being obtained in the step S303, and any positions which can store electronic files and electronic information, such as the terminal device, a portable storage device and a cloud side, are available.

Considering the risk that the security of the file information can be affected if the to-be-encrypted object which is not encrypted continues to be stored after the encrypted object is obtained, the step S305 can be executed to physically delete the to-be-encrypted object after the encrypted object is obtained in the step S303 as is shown in FIG.3.

Wherein, the to-be-encrypted object can be physically deleted only when needed and can also be physically deleted directly every time encryption is completed.

Under the condition that the to-be-encrypted object is physically deleted when needed, deletion can be conducted based on a prompt from the terminal device when needed. For example, after the to-be-encrypted object is obtained in the step S303, a prompt message indicating whether the source file needs to be physically deleted or not can be provided and can be displayed on the display interface of the terminal device for selection by the user. If the user selects deletion, a source file physical-deletion instruction can be sent out based on the option selected by the user, and the terminal device can physically delete the to-be-encrypted object based on the source file physical-deletion instruction.

Under the condition that the to-be-encrypted object is physically deleted every time encryption is completed, the to-be-encrypted object is physically deleted directly after encryption is completed.

Considering the factors such as the speed and the life of a disk, the file deleted by the user is generally logically deleted instead of being deleted truly when the file is deleted through an operating system. Logical deletion refers to a deletion flag being made at the storage position of the file needing to be deleted, a client is informed that the file has already been deleted at the client side, and the capacity record is corrected. Namely, the user thinks that the deleted file can be recovered before the area is covered by a new written-in file, and thus the risk that the files can be recovered by other people and consequentially the security is affected exists. In the scheme of the embodiment of the invention, by physically deleting the to-be-encrypted object, the risk that the to-be-encrypted object is not truly deleted by an application system and consequentially can be recovered is avoided.

The to-be-encrypted object can be physically deleted in various possible ways when needing to be deleted. In the embodiment of the invention, a random number can be written in the flag position after the system logically deletes the to-be-encrypted object. Since the position of the to-be-encrypted object is covered with the random number, previous information cannot be recovered after the position of the to-be-encrypted object is covered, the risk that the to-be-encrypted object is recovered by other people is avoided, and the information security is further improved.

Based on the illustrative description shown in FIG. 3, in the scheme of the embodiment of the invention, hardware and software are combined for protecting electronic data. FIG. 4 shows the principle diagram of the encryption process of the electronic data protection method in one embodiment. Accordingly, FIG. 5 shows a flow diagram of the interaction process between the terminal device and the data protection key hardware device in the electronic data protection method in one embodiment.

As is shown in FIG. 4, the terminal device can be a PC or a tablet computer or a mobile phone, and the terminal device acquires the user fingerprint information, the device identification, the password information and other information from the data protection key hardware device respectively in the process of encrypting the to-be-encrypted object, and thus the encryption process is completed.

As is shown in FIG. 4 and FIG. 5, a specific demonstration for encrypting a to-be-encrypted object can be described as follows.

Firstly, the terminal device starts to perform the encryption process when receiving an encryption instruction. In the encryption process, the fingerprint information acquisition instrument is sent to the data protection key hardware device when fingerprint information is needed.

After the data protection key hardware device receives the fingerprint information acquisition instruction, a fingerprint address random number storing the fingerprint information is found first, then an encrypted fingerprint random number is obtained based on the fingerprint address random number. Afterwards, the fingerprint random number is decrypted, and thus the user fingerprint information is acquired. The acquired user fingerprint information is transmitted to the terminal device after being encrypted through Bluetooth.

After the terminal device receives the user fingerprint information encrypted through Bluetooth, the user fingerprint information encrypted through Bluetooth is decrypted through Bluetooth, so that the user fingerprint information is obtained, and then the encryption process based on the user fingerprint information continues to be completed.

Soon afterwards, the terminal device continues to perform the encryption process and sends a device identification acquisition instruction to the data protection key hardware device when the device identification is needed;

After the data protection key hardware device receives the device identification acquisition instruction, a device identification address random number storing the device identification is found first, then an encrypted device identification random number is obtained based on the device identification address random number. Afterwards, the device identification random number is decrypted, and thus the device identification is acquired. The acquired device identification is transmitted to the terminal device after being encrypted through Bluetooth.

After the terminal device receives the device identification encrypted through Bluetooth, the device identification encrypted through Bluetooth is decrypted through Bluetooth, so that the device identification is obtained, and then the encryption process based on the device identification continues to be completed.

Finally, the terminal device continues to perform the encryption process after acquiring the information from the data protection key hardware device in the same method when the information is needed till the encryption process is completed and the encrypted object is obtained, and physically deletes the to-be-encrypted object.

What needs to be pointed out is that the above specific demonstration is described by acquiring the user fingerprint information and the device identification in sequence, the user fingerprint information, the device identification, the password information and other information can also be acquired in other sequences according to actual requirements and different types of encryption algorithm design. All the information can also be obtained synchronously, and the acquiring sequence of the information is not specifically limited in the embodiment of the invention.

Based on the scheme of the embodiment of the invention, the encrypted file can also be shared, in the specific implementation process. Whether a file needs to be encrypted conventionally or needs to be encrypted in a shared mode can be selected based on options such as menu bars, or different encryption trigger controls can be set for conventional encryption and encryption requiring file sharing for receiving the encryption instruction, or the selection can be achieved in different ways.

When an encrypted file which can be shared needs to be generated through encryption, a to-be-encrypted object is encrypted based on a public key of data protection key hardware devices possessed by target users sharing the encrypted file. For example, suppose that the user A needs to encrypt a file and then shares the encrypted file with the target user B, the user A possesses the data protection key hardware device A, and the target user B possesses the data protection key hardware device B, the user A encrypts the to-be-shared and to-be-encrypted file through the terminal device not only according to the information, such as the user fingerprint information and the device identification, stored in the data protection key hardware device A, but also according to the public key of the data protection key hardware device B. After the obtained encrypted file is shared with the target user B, the encrypted file can be decrypted based on a private key of the data protection key hardware device B, and thus the file is encrypted and shared. In this way, during encryption and sharing, the file is encrypted and shared based on the public key of the data protection key hardware devices possessed by the target users sharing the encrypted file. Accordingly, the encrypted file can be decrypted only based on the private keys of the data protection key hardware devices possessed by the target users sharing the encrypted file, and the file can be shared safely.

Based on the thought of the embodiment of the invention, the encrypted object can be protected when needing to be opened, and thus the encrypted object is prevented from being stolen by other people. FIG. 5 shows a principle diagram of protection for the encrypted object in running after the encrypted object is opened. As is shown in FIG. 5, for illustration, the encrypted object is used as a file, and the encrypted file is encrypted based on the user fingerprint information, the password information and the device identification.

As is shown in FIG. 5, the encrypted file can be opened through software corresponding to the method of the invention and can also be opened through external software.

When the encrypted file is opened through the software corresponding to the method of the invention, one specific realization process can be described as follows:

the process of decrypting the encrypted file is performed when an encrypted file opening instruction is received, the user fingerprint information, the password information and the device identification of the data protection key hardware device are acquired from the data protection key hardware device in the decryption process, and the specific acquisition process can be the same as that in the demonstration mentioned above;

soon afterwards, the encrypted file is decrypted in a decryption method corresponding to the decryption method mentioned above according to the acquired user fingerprint information, the password information, and the device identification;

a memory sandbox of an application system is called, and the decrypted file is made to run in the memory sandbox of the application system.

In addition, the decrypted file obtained after decryption can also be opened through external software, and in the scheme of the embodiment of the invention, the opening and closing conditions of each encrypted file can be tracked. In this circumstance, when it is monitored that the encrypted file is opened by an external application, the memory sandbox of the application system is called, and a memory file generated after the encrypted file is opened by the external application is made to run in the memory sandbox of the application system.

On the other hand, when the file is opened through a software application at present, a temporary file can be generated by a terminal application system without exception. The temporary file is not deleted after the file is closed, and consequentially, the security of the file can be affected. For this reason, in the scheme of the embodiment of the invention, the closing condition of the encrypted object is also tracked, and FIG. 6 shows a principle diagram of protection for the encrypted object after the opened encrypted object is closed. As is shown in FIG. 6, when it is monitored that the encrypted object is closed, the temporary file generated by the terminal application system can be deleted. For further improving the security, when it is monitored that the encrypted object is closed, the temporary file generated by the terminal application system can be deleted through the following steps of writing a random number into the storage position of the temporary file so as to cover the temporary file and then deleting the covered temporary file. In this way, even if the temporary file is acquired by other people, the original file cannot be recovered since the temporary file has already been destroyed by the random number.

Obviously, based on the method of the embodiment of the invention, no matter in which way the encrypted object is opened, the file in the memory runs under the protection of the sandbox; under the condition that the encrypted file is opened through external software, the temporary file is deleted in time after the file is closed, and the potential risk that the memory file generated in the file opening process and the temporary file generated after the file is closed are stolen is avoided.

Based on the thought identical with that of the electronic data protection method, the embodiment of the invention further provides an electronic data protection device. FIG. 7 shows a structure diagram of the electronic data protection device in one embodiment.

As is shown in FIG. 7, in the embodiment, the electronic data protection device comprises:
an encryption instruction receiving module 701 used for receiving an encryption instruction;
an information acquisition module 702 used for sending information acquisition instructions to a data protection key hardware device respectively and receiving information returned by the data protection key hardware device according to the information acquisition instructions respectively in the encryption process, wherein information acquisition instructions include a device identification acquisition instruction and a fingerprint information acquisition instruction, and the information returned by the data protection key hardware device includes the device identification and user fingerprint information;
an encryption processing module 703 used for performing the encryption process according to the encryption instruction, encrypting a to-be-encrypted object according to the information returned by the data protection key hardware device and obtaining the encrypted object.

According to the device in the embodiment of the invention, software and hardware are essentially combined to encrypt a to-be-encrypted object, in the process of encrypting the to-be-encrypted object, the user fingerprint information and the device identification of the data protection key hardware device are acquired through continuous communication with the data protection key hardware device, the encryption process depends on the acquired user fingerprint information and the device identification of the data protection key hardware device, and the to-be-encrypted object is encrypted based on the information provided by the data protection key hardware device; compared with the encryption method purely through hardware, the security of the encrypted object is greatly improved, and the encrypted object cannot be decrypted by any hackers or other people who want to steal information as long as the data protection key hardware device is possessed by the user. On the other hand, since the encryption process is not carried out on the data protection key hardware device and is performed essentially through hardware, the storage position of the obtained encrypted object can be set flexibly without being limited to the data protection key hardware device, and the storage space for electronic data is effectively expanded.

Wherein, a to-be-encrypted object can be encrypted also according to a password set by a user when needing to be encrypted. Therefore, the information acquisition instructions sent to the data protection key hardware device by the information acquisition module 702 can further include a password information acquisition instruction.

In this circumstance, the information received by the information acquisition module 702 and returned by the data protection key hardware device according to the information acquisition instructions can also include password information.

Correspondingly, the encryption processing module 703 encrypts the to-be-encrypted object based on the user fingerprint information, the device identification and the password information returned by the data protection key hardware device according to the password information acquisition instruction when the to-be-encrypted object needs to be encrypted.

Wherein, the user fingerprint information can be obtained through an ordinary fingerprint recognition device. For further improving the information security, in the embodiment of the invention, the fingerprint information is obtained through a swiping-type fingerprint acquisition device. Since the ordinary fingerprint recognition device is used for recognizing static fingerprint information, fingerprint pictures can also be recognized as correct fingerprints and are extremely likely to be used illegally for cheating, and the security of files is affected. In the embodiment of the invention, the fingerprint information is dynamically obtained in the swiping mode, static fingerprint information cannot be recognized, the probability of cheating by fingerprint information is avoided, and the security is improved.

On the other hand, the user fingerprint information can be binary digital fingerprint information instead of fingerprint pictures, the probability that the fingerprint information of the user is duplicated is avoided, and the security is further improved.

The device identification of the data protection key hardware device can be represented by a random number generated by a programming quantum computer when the data protection key hardware device is manufactured. With the presence of multiple data protection key hardware devices, the same random number can be used as the device identification of the multiple data protection key hardware devices, and the random number can be generated and written in by the programming quantum computer during the manufacturing process so that the multiple data protection key hardware devices can mutually back each other up, and the encrypted file can be decrypted through another data protection key hardware device under the condition that one data protection key hardware device is lost, and the security of electronic data is ensured.

For further improving the security, the user fingerprint information, the device identification, and the password information stored on the data protection key hardware device can be information encrypted through the data protection key hardware device, and thus the security is further improved. The specific encryption method can be any possible method and is not specifically limited in the embodiment of the invention, for example, a method different from the encryption method for the to-be-encrypted object can be adopted.

In one specific demonstration of the invention, with the password information as an example, the password information obtained after an original password input by the user is encrypted through the data protection key hardware device can be a random number, and the storage position of the password information obtained after encryption can be determined according to a generated random number. Based on this, when the data protection key hardware device receives the password information acquisition instructions, the corresponding address random number can be determined first, the password information random number can be obtained from the storage address of the password information random number after the storage address of the password information random number is found based on the address random number, and the password information random number is decrypted, so that the password information is obtained. Then the password information obtained through decryption is transmitted to a sender, namely the terminal device, sending the password information acquisition instruction through Bluetooth, wherein, the Bluetooth transmission process can be carried out in an encryption mode. The storage and acquisition method for the user fingerprint information and the device identification can be similar to that for the password information.

The encrypted object can be stored at the corresponding position of a preset path after being obtained through encryption processing by the encryption processing module 703, and any positions which can store electronic files and electronic information, such as the terminal device, a portable storage device and a cloud side, are available.

Considering the risk that the security of the file information can be affected if the to-be-encrypted object which is not encrypted continues to be stored after the encrypted object is obtained, as is shown in FIG. 7, the electronic data protection device in the embodiment can further comprise a physical deletion module 704 which is used for physically deleting the to-be-encrypted object after the encryption processing module 703 obtains the encrypted object.

Wherein, the to-be-encrypted object can be physically deleted only when needed and can also be physically deleted directly every time encryption is completed.

Under the condition that the to-be-encrypted object is physically deleted when needed, deletion can be conducted based on prompts of the terminal device when needed. For example, after the encryption processing module 703 obtains the to-be-encrypted object, a prompt message indicating whether the source file needs to be physically deleted or not can be provided by the physical deletion module 704 and can be displayed on the display interface of the terminal device for selection by the user. If the user selects deletion, a source file physical-deletion instruction can be sent out based on the option selected by the user, and the physical deletion module 704 can physically delete the to-be-encrypted object based on the source file physical-deletion instruction.

Under the condition that the to-be-encrypted object is physically deleted every time encryption is completed, the physical deletion module 704 directly deletes the to-be-encrypted object after the encryption processing module 703 obtains the encrypted object by completing the encryption process.

Considering the factors such as the speed and the life of a disk, the file deleted by the user is generally logically deleted instead of being deleted truly when the file is deleted through an operating system, logical deletion refers to a deletion flag being made at the storage position of the file needing to be deleted, a client is informed that the file has already been deleted at the client side, and the capacity record is corrected. Namely, the user thinks that the deleted file can be recovered before the area is covered by a new written-in file, and thus the risk that the files can be recovered by other people and consequentially the security is affected exists. In the scheme of the embodiment of the invention, by physically deleting the to-be-encrypted object, the risk that the to-be-encrypted object is not truly deleted by an application system and consequentially can be recovered is avoided.

The physical deletion module 704 can physically delete the to-be-encrypted object in various possible ways, in the embodiment of the invention, the physical deletion module 704 writes a random number into the flag position after the system logically deletes the to-be-encrypted object. Since the position of the to-be-encrypted object is covered with the random number, previous information cannot be recovered after the position of the to-be-encrypted object is covered, the risk that the to-be-encrypted object is recovered by other people is avoided, and the information security is further improved.

Based on the scheme of the embodiment of the invention, the encrypted file can also be shared, in the specific implementation process, whether a file needs to be encrypted conventionally or needs to be encrypted in a shared mode can be selected based on options such as menu bars, or different encryption trigger controls can be set for conventional encryption and encryption requiring file sharing for receiving the encryption instruction, or the selection can be achieved in different ways.

When an encrypted file which can be shared needs to be generated through encryption, the encryption processing module 703 encrypts the to-be-encrypted object based on a public key of data protection key hardware devices possessed by target users sharing the encrypted file.

For example, suppose that the user A needs to encrypt a file and then shares the encrypted file with the target user B, the user A possesses the data protection key hardware device A, and the target user B possesses the data protection key hardware device B, the user A encrypts the to-be-shared and to-be-encrypted file through the terminal device not only according to the information, such as the user fingerprint information and the device identification, stored in the data protection key hardware device A, but also according to the public key of the data protection key hardware device B. After the obtained encrypted file is shared with the target user B, the encrypted file can be decrypted based on a private key of the data protection key hardware device B, and thus the file is encrypted and shared. In this way, during encryption and sharing, the file is encrypted and shared based on the public key of the data protection key hardware devices possessed by the target users sharing the encrypted file, accordingly, the encrypted file can be decrypted only based on the private keys of the data protection key hardware devices possessed by the target users sharing the encrypted file, and the file can be shared safely.

As is shown in FIG. 7, the electronic data protection device in the embodiment can further comprise a file running protection module 705 used for protecting an encrypted file during running.

In one embodiment, the file running protection module 705 is used for calling a memory sandbox of an application system when the encrypted file runs after being decrypted and making the decrypted file run in the memory sandbox of the application system.

[0096]

In another embodiment, with an encrypted file which is encrypted based on the user fingerprint information, the password information and the device identification as an example, the file running protection module 705 can acquire the user fingerprint information, the password information and the device identification of the data protection key hardware device from the data protection key hardware device when receiving an encrypted file opening instruction, decrypt the encrypted object according to the acquired user fingerprint information, the password information and the device identification, call the memory sandbox of the application system, and make the decrypted file run in the memory sandbox of the application system.

On the other hand, when the file is opened through a software application at present, a temporary file can be generated by a terminal application system without exception, and the temporary file is not deleted after the file is closed, and consequentially, the security of the file can be affected.

For this reason, the file running protection module 705 also tracks the closing condition of the encrypted object and can delete the temporary file generated by the terminal application system when monitoring that the encrypted object is closed. For further improving the security, when monitoring that the encrypted object is closed, the file running protection module 705 can delete the temporary file generated by the terminal application system through the following steps of writing a random number into the storage position of the temporary file so as to cover the temporary file and then deleting the covered temporary file. In this way, even if the temporary file is acquired by other people, the original file cannot be recovered since the temporary file has already been destroyed by the random number.

In this way, based on the protection mechanism of the file running protection module 705, no matter in which method the encrypted object is opened, the file in the memory runs under the protection of the sandbox; under the condition that the encrypted file is opened through external software, the temporary file is deleted in time after the file is closed, and the potential risk that the memory file generated in the file opening process and the temporary file generated after the file is closed are stolen is avoided.

Based on the electronic data protection device, one embodiment of the invention further provides a terminal device. The terminal device comprises a terminal device body, and the electronic data protection device mentioned above is stored in a storage medium of the terminal device body. When the electronic data protection device operates, the electronic data protection in the embodiment of the invention can be performed.

Furthermore, the terminal device in the embodiment of the invention can further comprise the data protection key hardware device, the number of the data protection key hardware devices can be two or more, device identifications of the data protection key hardware devices can be represented by a random number generated by a programming quantum computer when the data protection key hardware devices are manufactured, namely, the same random number is used as the device identifications. In this way, under the condition that one data protection key hardware device is lost, the encrypted file can be decrypted through another data protection key hardware device, and the security of electronic data is ensured.

Wherein, a reset key can be arranged on the data protection key hardware device, for example, the reset key can be arranged on the back or other positions of the data protection key hardware device, and a reset instruction can be received through the reset key, and the device identification (namely a random number) stored on the data protection key hardware device can be cleared or reset when the reset instruction is received. After the device identification is cleared or reset, the file previously encrypted through the hardware cannot be opened, and thus no matter where the encrypted object is stored, the user can rapidly destroy all data in an emergency. In addition, under the condition that the device identification is reset, the data protection key hardware device can serve as a new device for use, and the service sustainability of the device is improved.

With the presence of multiple data protection key hardware devices, one data protection key hardware device can be integrated in the terminal device body, so that without increasing the size of the terminal device body, the attractiveness of the terminal device is ensured, and the terminal device can be used by the user conveniently.

Those skilled in the field can understand all or part of the procedures for realizing the method in the above embodiments, relevant hardware can be instructed through a computer program to complete the procedures, the program can be stored in a computer-readable storage medium, and all the procedures in the embodiments of the method can be achieved when the program runs. Wherein, the storage medium can be a diskette or a disk or a read-only memory (ROM) or a random access memory (RAM) or other storage media.

Technical characteristics of the above embodiments can be combined freely, and for a brief description, possible combinations of the technical characteristics of the above embodiments are not all described, however, all non-conflicting combinations of the technical characteristics should be within the scope recorded in the description.

The above embodiments only show several execution modes of the invention and are specifically described in detail, but the scope of the invention patent is not limited to the above embodiments. It should be pointed out that various transformations and improvements which can be made by those skilled in the field without deviating from the concept of the invention are all within the protection scope of the invention. Therefore, the protection scope of the invention patent is subject to the attached Claim.

## Claims

1. An electronic data protection method, **characterized by** comprising the steps of performing the encryption process when an encryption instruction is received; in the encryption process, sending information acquisition instructions to a data protection key hardware device respectively and receiving information returned by the data protection key hardware device according to the information acquisition instructions respectively, wherein the information acquisition instructions include a device identification acquisition instruction and a fingerprint information acquisition instruction, and the information returned by the data protection key hardware device includes the device identification and user fingerprint information; encrypting a to-be-encrypted object according to the information returned by the data protection key hardware device, and obtaining an encrypted object.

2. The electronic data protection method according to Claim 1, **characterized in that** the information acquisition instructions further include a password information acquisition instruction, and the information further includes password information returned by the data protection key hardware device according to the password information acquisition instruction; the to-be-encrypted object is encrypted according to the user fingerprint information, the device identification and the password information when needing to be encrypted

3. The electronic data protection method according to Claim 1 or 2, **characterized in that** the to-be-encrypted object is encrypted according to a public key of the data protection key hardware device possessed by a target object sharing the to-be-encrypted object when needing to be encrypted.

4. The electronic data protection method according to Claim 1 or 2, **characterized in that** after the encrypted object is obtained, the step of writing a random number into the flag position after a system logically deletes the to-be-encrypted object is further executed.

5. The electronic data protection method according to Claim 1, **characterized in that** the user fingerprint information is binary digital fingerprint information.

6. The electronic data protection method according to Claim 2, **characterized in that** when an encrypted file opening instruction is received, the user fingerprint information, the password information and the device identification of the data protection key hardware device are acquired from the data protection key hardware device; the encrypted object is decrypted according to the acquired user fingerprint information, the password information and the device identification; a memory sandbox of an application system is called, and the encrypted file is made to run in the memory sandbox of the application system.

7. The electronic data protection method according to Claim 1, **characterized in that** when it is monitored that the encrypted object is opened by an external application, the memory sandbox of the application system is called, and a memory file generated after the encrypted object is opened by the external application is made to run in the memory sandbox of the application system.

8. The electronic data protection method according to Claim 7, **characterized in that** when it is monitored that the encrypted object is closed, a covered temporary file is deleted after a random number is written into the storage position of the temporary file corresponding to the encrypted object.

9. The electronic data protection method according to Claim 1, **characterized in that** the device identification of the data protection key hardware device is a random number generated by a programming quantum computer when the data protection key hardware device is manufactured.

10. An electronic data protection device, **characterized by** comprising an encryption instruction receiving module used for receiving an encryption instruction; an information acquisition module used for sending information acquisition instructions to a data protection key hardware device respectively and receiving information returned by the data protection key hardware device according to the information acquisition instructions respectively in the encryption process, wherein information acquisition instructions include a device identification acquisition instruction and a fingerprint information acquisition instruction, and the information returned by the data protection key hardware device includes the device identification and user fingerprint information; an encryption processing module used for performing the encryption process according to the encryption instruction, encrypting a to-be-encrypted object according to the information returned by the data protection key hardware device and obtaining the encrypted object.

11. The electronic data protection device according to Claim 10, **characterized in that** the information acquisition instructions further include a password information acquisition instruction, and the information further includes password information returned by the data protection key hardware device according to the password information acquisition instruction; the encryption processing module encrypts the to-be-encrypted object according to the user fingerprint information, the device identification and the password information.

12. The electronic data protection device according to Claim 10 or 11, **characterized in that** the encryption processing module encrypts the to-be-encrypted object also based on a public key of the data protection key hardware device of a target object sharing the to-be-encrypted object.

13. The electronic data protection device according to Claim 10, **characterized by** further comprising a physical deletion module, wherein the physical deletion module is used for writing a random number into the flag position after the encryption processing module obtains an encrypted object and a system logically deletes the to-be-encrypted object.

14. The electronic data protection device according to Claim 10, **characterized in that** the user fingerprint information is binary digital fingerprint information.

15. The electronic data protection device according to Claim 11, **characterized by** further comprising a file running protection module used for acquiring the user fingerprint information, the password information and the device identification of the data protection key hardware device from the data protection key hardware device after receiving an encrypted file opening instruction, encrypting the to-be-encrypted object according to the acquired user fingerprint information, the password information and the device identification, calling a memory sandbox of an application system, and making the encrypted file run in the memory sandbox of the application system.

16. The electronic data protection device according to Claim 10, **characterized in** by further comprising a file running protection module used for calling a memory sandbox of an application system after monitoring that the encrypted object is opened by an external application and making a memory file generated after the encrypted object is opened by the external application run in the memory sandbox of the application system.

17. The electronic data protection device according to Claim 16, **characterized in that** the file running protection module is also used for deleting a covered temporary file after a random number is written into the storage position of the temporary file corresponding to the encrypted object to cover the temporary file when monitoring that the encrypted object is closed.

18. The electronic data protection device according to Claim 10, **characterized in that** the device identification of the data protection key hardware device is a random number generated by a programming quantum computer when the data protection key hardware device is manufactured.

19. A terminal device, comprising a terminal device body, **characterized in that** the electronic data protection device according to any of the Claims 10-18 is stored in a storage medium of the terminal device body.

20. The terminal device according to Claim 19, **characterized in that** the terminal device further comprises the data protection key hardware device.

21. The terminal device according to Claim 20, **characterized in that** the number of the data protection key hardware devices is two or more.

22. The terminal device according to Claim 21, **characterized in that** one data protection key hardware device is integrated in the terminal device body.

23. A storage medium comprising a computer-readable program, **characterized in that** the electronic data protection method according to any of the Claims 1-9 is performed when the computer-readable program in the storage medium is performed.
